# EUROPEAN PATENT APPLICATION

(11) **EP 3 904 299 A1**
(43) Date of publication of application: **03.11.2021**
(21) Application number: 19903162.6
(22) Date of filing: 27.12.2019
(51) Int. Cl.: C02F 11/12, B04B 1/20, C02F 103/20

(54) **DEVICE FOR REMOVING WATER FROM LIVESTOCK WASTE AND LIVESTOCK WASTE PROCESSING SYSTEM USING SAME**

(30) Priority: 28.12.2018 KR 20180172999
(71) Applicant: Korea Institute of Machinery & Materials, Daejeon 34103 (KR)
(72) Inventor: LEE, Gi Chun, Daejeon 35219 (KR); LEE, Yong-Bum, Daejeon 35219 (KR); PARK, Jong-Won, Daejeon 35219 (KR); JUNG, Dong-Soo, Daejeon 35219 (KR); EOM, Hak Yong, Daejeon 35219 (KR); CHOI, Jong Sik, Daejeon 35219 (KR); LEE, Kye Suk, Daejeon 35219 (KR); NAM, Tae Yeon, Daejeon 35219 (KR)
(74) Representative: Germain Maureau
(86) International application number: PCT/KR2019/018614
(87) International publication number: WO 2020/139026

(57) **Abstract**

An apparatus for dehydrating livestock manure according to an exemplary embodiment of the present invention includes: a porous filter that is hollow and has an inlet at a side through which livestock manure is supplied, an outlet at another side through which dehydrated livestock manure is discharged, and a plurality of moisture discharge holes formed through the inside and outside; and a screw that includes a rotary shaft and blades spirally formed longitudinally on the rotary shaft such that the pitch P and the depth D of the groove of the blades gradually decrease as they go longitudinally from the inlet to the outlet, and that is disposed in the porous filter with a gap therebetween.

## Description

### [Technical Field]

The present invention relates to an apparatus for dehydrating livestock manure that can dehydrate manure, and a system for treating livestock manure using the apparatus.

### [Background Art]

Livestock manure is excretion that is discharged from dairy cattle, beef cattle, pigs, chickens, etc. and has various moisture contents such as some having a large amount of moisture and some having a small amount of moisture.

Using existing apparatuses, it is possible to dehydrate manure of pigs or chickens but it is technically insufficient to remove only moisture from manure of dairy cattle or beef cattle because the manure contains fibroid materials.

For example, some of existing apparatuses remove moisture by applying a centrifugal force or vibration, but this technology is difficult to popularize because the filter are clogged.

Alternatively, livestock manure having a low moisture content is added with water to increase the moisture and then the moisture is removed in a centrifugal separation type, etc., but this method only increases the amount of the manure, so an environmental contamination factor is increased.

Further, although there is a method of drying livestock manure using an electric heater, it takes about 10 to 15 days to remove water, so there is drawback that this method is difficult to use to treat a large amount of livestock manure, electric heaters are expensive, and a large amount of power is required.

Further, since cattle eat a large amount of grass, unlike pigs, when existing common dehydration apparatuses are used, filters are easily clogged, so the apparatuses are frequently broken and the efficiency thereof is deteriorated. Further, since various accessories should be mounted, the prices of the apparatuses are increased.

Further, existing apparatuses should be replaced in accordance with moisture contents.

### [Disclosure]

### [Technical Problem]

The present invention has been made in an effort to provide an apparatus for dehydrating livestock manure that can easily dehydrate manure containing fibroid materials and can prevent a malfunction of a livestock mature treatment system, and a system for treating livestock manure using the apparatus.

### [Technical Solution]

An apparatus for dehydrating livestock manure according to an exemplary embodiment of the present invention includes: a porous filter that is hollow and has an inlet at a side through which livestock manure is supplied, an outlet at another side through which dehydrated livestock manure is discharged, and a plurality of moisture discharge holes formed through the inside and outside; and a screw disposed in the porous filter, and including a rotary shaft and blades spirally formed longitudinally on the rotary shaft.

A distance between the interior circumference of the porous filter and the external circumferential surface of the rotary shaft may gradually decrease as it goes longitudinally from the inlet to the outlet.

The rotary shaft of the screw may have a uniform exterior diameter, and the exterior diameter and the pitch P of the blades may gradually decrease as they longitudinally go.

The exterior diameter of the porous filter may gradually decrease as it goes longitudinally such that the surface forming the radial outer ends of the blades is parallel with the interior circumstance of the porous filter.

The apparatus may further include a housing having an intake port at a side through which livestock manure is supplied and that is connected to the inlet of the porous filter, having an exhaust port at another side through which livestock manure is discharged and that is connected to the outlet of the porous filter, and having the porous filter and the screw therein such that the external circumferential surface of the porous filter is coupled to be spaced apart from the housing and the screw is rotatably coupled.

The apparatus may further include gap adjusters disposed at both sides of a bearing, fitted on the rotary shaft coupled to the housing through the bearing coupled to the housing, supported by the bearing, and being able to adjust a longitudinal position of the screw.

The porous filter may be formed in a separate type in which the porous filter is divided into a plurality of parts along a central axis, and the plurality of parts may be combined with a spacer therebetween.

The apparatus may further include an anti-load device connected between the inlet and the outlet of the porous filter and discharging livestock manure into the outside of the porous filter when the internal pressure of the porous filter increases over a predetermined pressure.

The rotary shaft of the screw may be formed such that the exterior diameter gradually increases as it goes longitudinally, and the blades may have a uniform exterior diameter.

The area of the moisture discharge holes may gradually increases as it goes outward from the inside.

The blades may include a plurality of blades circumferentially spaced a predetermined gap apart from each other, and at least one auxiliary blade may be formed between a plurality of blades on the rotary shaft at the outlet.

A system for treating livestock manure according to an exemplary embodiment of the present invention includes: the apparatus for dehydrating livestock manure; and a block maker that has an inlet connected to the outlet of the apparatus for dehydrating livestock manure, compresses livestock manure discharged after dehydrated in the apparatus for dehydrating livestock manure in a pressing chamber, and discharges the livestock manure in a block shape through the outlet.

The block maker may include: a pressing chamber that is hollow, has an inlet at a side through which livestock manure is supplied, has an outlet at another side through which livestock manure is discharged; a first actuator installed on a side of the pressing chamber; a pressing plate coupled to the first actuator to be straightly movable through the pressing chamber, and having a plurality of through-pins protruding toward the outlet; and a discharge door installed on another side of the pressing chamber and opening/closing the outlet.

The system may further include a second actuator installed on the pressing chamber, in which the discharge door may be rotatably coupled to the pressing chamber through a rotation shaft and a side of the discharge door may be coupled to the second actuator.

The pressing plate may have a plurality of conical protrusions on a surface facing the discharge door, and the through-pins may protrude from the centers of the protrusions, respectively.

The discharge door may have a plurality of conical protrusions protruding from a surface facing the pressing plate at positions corresponding to the through-pins, respectively.

The system may further include a conveyer disposed at the outlet of the block maker and conveying livestock manure block formed and discharged by the block maker.

The system may further include a urine storage connected to the apparatus for dehydrating livestock manure and collecting and storing moisture discharged from the apparatus for dehydrating livestock manure.

### [Advantageous Effects]

According to the apparatus for dehydrating livestock manure according to an exemplary embodiment of the present invention and the system for treating livestock manure using the apparatus for dehydrating livestock manure, there is the advantage that it is easy to dehydrate livestock manure containing fibrous materials and a malfunction, that is, clogging of a filter due to fibrous materials contained in livestock manure is prevented, so reliability of the apparatus for dehydrating livestock manure is improved.

### [Description of the Drawings]

FIG. 1 is a front cross-sectional view showing an apparatus for dehydrating livestock manure according to a first exemplary embodiment of the present invention.
FIG. 2 is a schematic diagram showing a system for treating livestock manure using the apparatus for dehydrating livestock manure according to the first exemplary embodiment of the present invention.
FIG. 3 is a cross-section schematic diagram showing a block maker according to an exemplary embodiment of the present invention.
FIG. 4 to FIG. 6 are cross-section schematic diagrams showing an operation state of the block maker of FIG. 3.
FIG. 7 to FIG. 8 are a front view and a side view showing a livestock manure block discharged from the block maker according to an exemplary embodiment of the present invention.
FIG. 9 is a front cross-sectional view showing an apparatus for dehydrating livestock manure according to a second exemplary embodiment of the present invention.
FIG. 10 is a side cross-sectional view showing a porous filter and a screw of the apparatus for dehydrating livestock manure according to the second exemplary embodiment of the present invention.
FIG. 11 is a schematic diagram showing a system for treating livestock manure using the apparatus for dehydrating livestock manure according to the second exemplary embodiment of the present invention.
FIG. 12 to FIG. 14 are views showing a porous filter of an apparatus for dehydrating livestock manure according to a third exemplary embodiment of the present invention.
FIG. 15 is a view showing a screw of the apparatus for dehydrating livestock manure according to the third exemplary embodiment of the present invention.

### [Mode for Invention]

Hereafter, the present invention is described with reference to the accompanying drawings. However, the present invention may be modified in various different ways and is not limited to the exemplary embodiments described herein. Accordingly, the drawings and description are to be regarded as illustrative in nature and not restrictive. Like reference numerals designate like elements throughout the specification.

Throughout the specification, when an element is referred to as being "connected with (coupled to, combined with, in contact with)" another element, it may be "directly connected" to the other element and may also be "indirectly connected" to the other element with another element intervening therebetween. Further, unless explicitly described otherwise, "comprising" any constituent element will be understood to imply the inclusion of other constituent element rather than the exclusion of any other constituent element.

Terms used in the specification are used only to describe specific exemplary embodiment and are not intended to limit the present invention. Singular forms are intended to include plural forms unless the context clearly indicates otherwise. It will be further understood that the terms "comprises" or "have" used in this specification, specify the presence of stated features, steps, operations, constituent element, parts, or a combination thereof, but do not preclude the presence or addition of one or more other features, numerals, steps, operations, constituent element, parts, or a combination thereof.

Hereafter, an apparatus for dehydrating livestock manure of the present invention is described in detail with reference to the accompanying drawings.

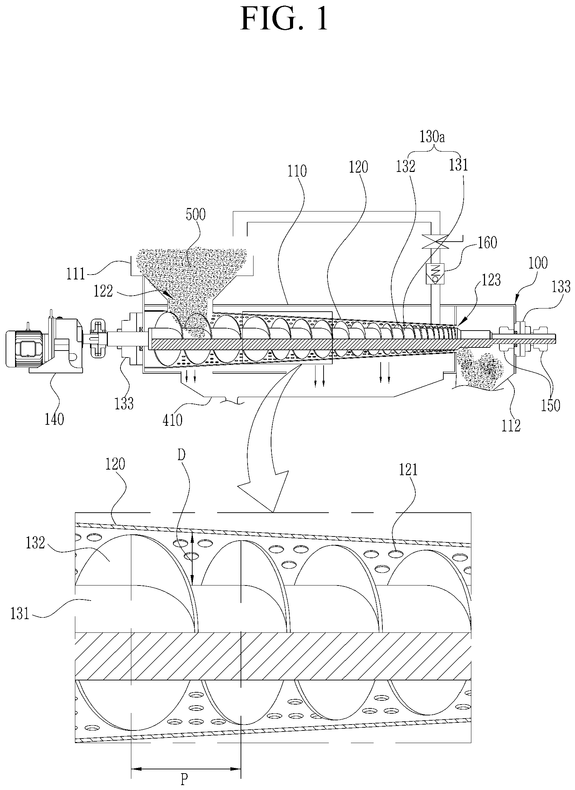

FIG. 1 is a front cross-sectional view showing an apparatus for dehydrating livestock manure according to a first exemplary embodiment of the present invention.

Referring to FIG. 1, an apparatus for dehydrating livestock manure according to a first exemplary embodiment of the present invention, in a broad meaning, may include a housing 110, a porous filter 120, a screw 130a, and a driving unit 140.

First, the housing 110 is hollow and has a hopper-shaped intake port 111 at the left upper portion and an exhaust port 112 at the right lower portion. A urine collection pipe 410 may be connected to the housing 110. Although the conveying direction of livestock manure is exemplified from the left to the right in the specification, it is defined in the longitudinal direction for the porous filter or the screw.

The porous filter 120 is disposed in the housing 110 and may be coupled and fixed to the housing 110. The porous filter 120 is spaced apart from the interior circumference of the housing 110. The porous filter 120 is formed in a hollow cylindrical shape and has a plurality of moisture exhaust holes 121 formed through the interior circumference and the external circumferential surface, whereby moisture can be discharged out of the porous filter 120 through the moisture exhaust holes 121 formed in the porous filter 120 while livestock manure is compressed. The porous filter 120 has an inlet 122 that is formed at the left upper portion and communicates with the intake port 111 of the housing 110, and has an outlet 123 that is formed at the right lower portion and communicates with the exhaust port 112 of the housing 110.

The screw 130a is composed of a rotary shaft 131 and blades 132, the rotary shaft 131 has a uniform exterior diameter, the blades 132 are formed in a plate shape longitudinally spirally formed and combined, and the exterior diameter of the blade s132 gradually decreases as it longitudinally goes. For example, the rotary shaft 131 and the blades 132 are separately formed and then the blades 132 are coupled to the rotary shaft 131 and then fixed by welding, etc., whereby the screw 130a can be formed. The rotary shaft 131 may be coupled to the left and right sides of the housing 110 to be rotatable through bearings 133. The portion, on which the blades 132 are formed, of the screw 130a is disposed on the porous filter 120 and both ends of the rotary shaft 131 may be exposed to the outside of the housing 110. The surface connecting the outer ends of the blades 132 that are surfaces forming the radial outer side of the screw 130a is disposed in parallel with the interior circumference of the porous filter 120. The porous filter 120 may be formed in a shape corresponding to the outer shape of the screw 130a such that the exterior diameter gradually decreases as it longitudinally goes. The screw 130a is formed such that the pitch P of the blades 132 gradually decreases from the left to the right, and is formed such that the distance D between the interior circumference of the porous filter 120 to the external circumferential surface of the rotary shaft 131 gradually decreases from the left to the right, that is, from the inlet 122 to the outlet 123. For reference, the screw 130a has double blades in the drawings, but may have a single, or triple or more blades.

A conveying cross-sectional area of the screw 130a that is an area in which livestock manure 500 can exist is formed to gradually decrease from the left to the right which is the conveying direction of the livestock manure. Accordingly, the livestock manure 500 is gradually compressed much as it goes to the right side of the screw 130a, so dehydration can be easy. That is, the conveying cross-section decreases in both of the pitch direction and the depth direction as it goes in the conveying direction of the livestock manure, which causes an effect that livestock manure is entirely squeezed while the volume decreases. Accordingly, the effect of dehydrating livestock manure can be maximized. The pitch P of the blades 132 is the distance between adjacent blades and the distance D may be a straight distance between the interior circumference of the porous filter 120 and the external circumferential surface of the rotary shaft 131 in the direction perpendicular to the central axis of the rotary shaft 131. The conveying cross-section may be a space defined by adjacent blades 132, the external circumferential surface of the rotary shaft 131, and the line connecting the radial outer end of the blades.

The driving unit 140 may be a reduction motor for driving the screw 130a. The driving unit 140 may be coupled and fixed to the housing 110, etc., and a driving shaft may be connected to the rotary shaft 131 of the screw 130a. Livestock manure 500 supplied into the intake port 111 is pressed while being conveyed from the left to the right by rotation of the screw 130a, and in this process, moisture is removed and collected into a urine storage tank 420. After moisture is removed, the livestock manure 500 conveyed by rotation of the screw passes through the gap formed between the external circumferential surface of the blade at the right end of the screw 130a and the interior circumference of the right end of the porous filter 120, whereby the livestock manure 500 can be discharged to the outside through the outlet 123 and the exhaust port 112.

Accordingly, the apparatus for dehydrating livestock manure of the present invention can easily dehydrate livestock manure containing fibroid materials and can achieve a sufficient dehydration effect. Further, there is the advantage that the malfunction that a filter is clogged with fibroid materials contained in livestock manure is prevented, so reliability of a livestock manure treatment apparatus is improved.

Meanwhile, both sides of the rotary shaft 131 of the screw 130a are coupled through the bearings 133 coupled to the housing 110, and shown in the figures, gap adjusters 150 may be coupled at both sides with the right bearing 133 therebetween. Male threads are formed on the external circumferential surface, on which the gap adjusters 150 are fitted, of the rotary shaft 131, and the gap adjusters 150 may be nuts. Accordingly, when the nut disposed in the housing 110 is tightened, the screw 130a is moved left, whereby the portion through which dehydrated livestock manure comes out, that is, the gap between the external circumferential surface of the blade at the right end of the screw 130a and the interior circumference of the right end of the porous filter 120 is increased. On the contrary, when the nut disposed outside the housing 110 is tightened, the screw 130a is moved right, whereby the portion through which dehydrated livestock manure comes out, that is, the gap between the external circumferential surface of the blade at the right end of the screw 130a and the interior circumference of the right end of the porous filter 120 is decreased. Therefore, it is possible to adjust the degree of dehydration of livestock manure using the gap adjusters 150.

An anti-load device 160 is installed to be connected between the inlet 122 and the outlet 123 of the porous filter 120, so when the internal pressure of the porous filter 120 increases over a predetermined pressure, it is possible to discharge livestock manure out of the porous filter 120 using the anti-load device 160. The anti-load device 160 may be connected by a pipe such that a side thereof is connected to the porous filter 120 and another side is connected to the intake port 111 of the housing 110.

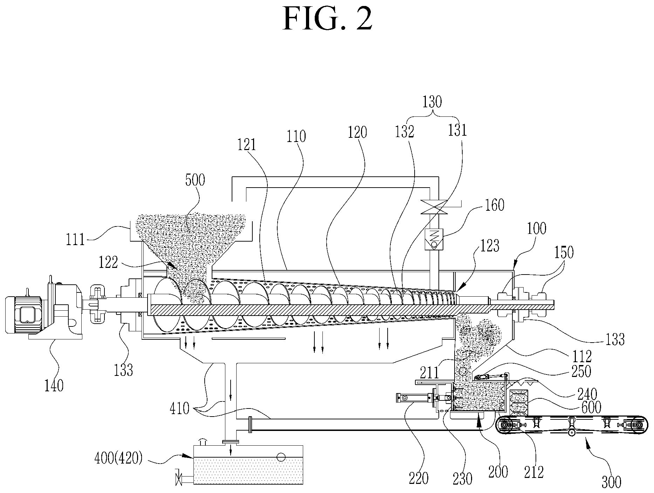

FIG. 2 is a schematic diagram showing a system for treating livestock manure using the apparatus for dehydrating livestock manure according to the first exemplary embodiment of the present invention.

Referring to FIG. 2, a system for treating livestock manure of the present invention, in a broad meaning, may include the apparatus 100 for dehydrating livestock manure described above, a block maker 200, a conveyer 300, and a urine storage 400.

First, the apparatus 100 for dehydrating livestock manure serves to dehydrate livestock manure. According to the apparatus 100 for dehydrating livestock manure, livestock manure 500 supplied into the hopper, which is the intake port 111 at the left upper portion, is compressed while being conveyed from the left to the right by the screw 130a rotating in the housing 110. The compressed and dehydrated livestock manure is discharged through the exhaust port 112 at the right lower portion. The moisture removed from the livestock 500 is collected into the urine storage tank 420 that is the urine storage 400 through the urine collection pipe 410.

The block maker 200 serves to be supplied with livestock manure dehydrated to have a specific moisture content and to straightly compress the livestock manure such that the livestock manure is formed in a predetermined block shape and then discharged. The block maker 200 may have an inlet 211 connected to the exhaust port 112 of the apparatus 100 for dehydrating livestock manure. A livestock manure block 600 formed in a block shape by the block maker 200 can be discharged through an outlet 212. Livestock manure is little dehydrated in the block maker 200, but moisture may be discharged from the livestock manure by compression. Accordingly, when moisture is discharged, the moisture is collected into the urine storage tank 420 through the urine collection pipe 410.

The conveyer 300 may be a conveyer that can convey the livestock manure block 600 discharged from the block maker 200, etc., and for example, it may be a belt conveyer.

The urine storage 400 is a component collecting and storing moisture discharged from the apparatus 100 for dehydrating livestock manure and may be connected to the lower end of the housing 110 of the apparatus 100 for dehydrating livestock manure such that moisture is collected and stored in the urine storage tank 420 through the urine collection pipe 410.

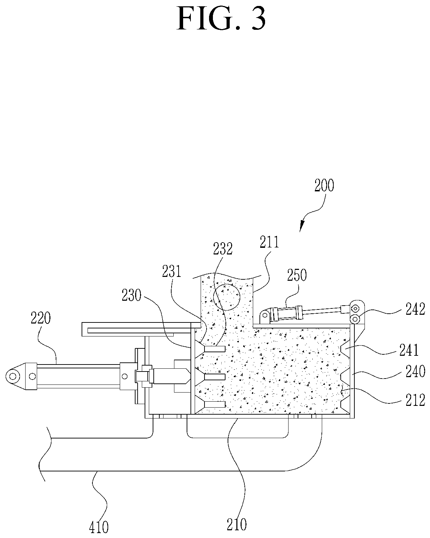

FIG. 3 is a cross-section schematic diagram showing a block maker according to an exemplary embodiment of the present invention.

Referring to FIG. 3, the block maker 200, in a broad meaning, may include a pressing chamber 210 having the inlet 211 and the outlet 22, a first actuator 220, a pressing plate 230, a discharge door 240, and a second actuator 250.

The pressing chamber 210 may be formed in a hollow hexahedral case shape. The inlet 211 may be formed at the upper portion of the left side that is one side of the pressing chamber 210 and the outlet 212 may be formed at the right side that is another side of the pressing chamber 210. The inlet 211 is connected to the exhaust port 112 of the apparatus 100 for dehydrating livestock manure, so dehydrated livestock manure can be supplied into the pressing chamber 210 through the inlet 211, and can be compressed and formed in the pressing chamber 210 and then discharged out of the pressing chamber 210 through the outlet 212.

The first actuator 220 serves to compress the livestock manure supplied in the pressing chamber 210. The first actuator 220 may be installed and fixed outside the left side of the pressing chamber 210. The first actuator 220, for example, may be a hydraulic cylinder that can straightly push left and right a pressing plate 230 to be described below. The first actuator 220 has a rod that can straightly reciprocate and the rod may be disposed through the pressing chamber 210 with an end in the pressing chamber 210.

The pressing plate 230 is disposed in the pressing chamber 210 to be movable left and right. The pressing plate 230 is coupled to the end of the rod of the first actuator 220 and is moved from the left to the right by operation of the first actuator 220, thereby being able to press and compress livestock manure. After compression, the pressing plate 230 is moved from the right to the left, thereby being able to return to the initial position before pressing. The pressing plate 230 has a plurality of through-pins 232 protruding from the right-hand side thereof. The through-pins 232 may straightly extend toward the discharge door 240 in the movement direction of the pressing plate 230. The through-pins 232 may be arranged in a matrix shape. Protrusions 231 protruding from the right-hand side of the pressing plate may be formed at the joints between the pressing plate 230 and the through-pins 232. The protrusions 231 protrude in conical shapes from the right-hand side of the pressing plate 230 and the through-pins 232 extend right from the right ends of the protrusions 231, respectively, whereby funnel shapes may be formed.

The discharge door 240 is installed at the outlet 212 formed on the right side of the pressing chamber 210 and serves to open and close the outlet 212. The discharge door 240 may be coupled to the right upper edge of the pressing chamber 210 through a rotation shaft 242 to be able to rotate about the rotation shaft 242. The discharge door 240 may have conical protrusions 241 protruding toward the pressing plate 230 from the left-hand side thereof. The protrusions 241 of the discharge door 240 may be formed at positions corresponding to the protrusions 231 formed on the pressing plate 230, respectively.

The second actuator 250 may be installed on the outer surface of the top of the pressing chamber 210 and serves to open and close the outlet 212 of the pressing chamber 210 by rotating the discharge door 240. The second actuator 250, for example, is a hydraulic cylinder of which a side that is the left side of the body may be rotatably coupled to the pressing chamber and another side that is an end of the rod may be rotatably coupled to the discharge door 240. Accordingly, the discharge door 240 is rotated by operation of the second actuator 250, thereby being able to open or close the outlet 212.

The operation process of the block maker 200 is described hereafter.

First, referring to FIG. 3, in the block maker 200, the pressing plate 230 has been moved to the leftmost side in the pressing chamber 210 and the discharge door 240 has closed the outlet 212 of the pressing chamber 210. In this state, primarily dehydrated livestock manure is put into the pressing chamber 210 through the inlet 211, so the pressing chamber 210 is filled with livestock manure.

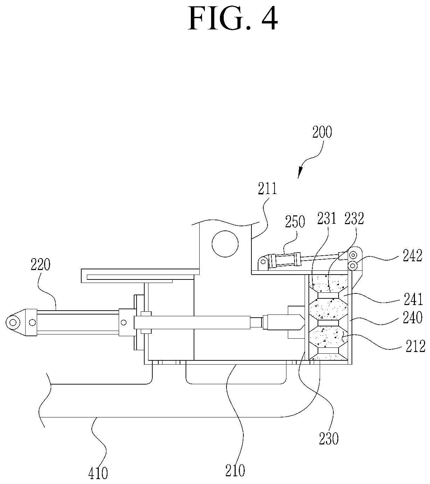

FIG. 4 to FIG. 6 are cross-section schematic diagrams showing an operation state of the block maker of FIG. 3.

Referring to FIG. 4, thereafter, the pressing plate 230 is moved right by operation of the first actuator 220 with the pressing chamber 210 filled with livestock manure, whereby the livestock manure is compressed and formed. In this process, the pressing plate 230 can be stopped after the right ends of the through-pins 232 are moved to come in contact with the protrusions 241 of the discharge door 240.

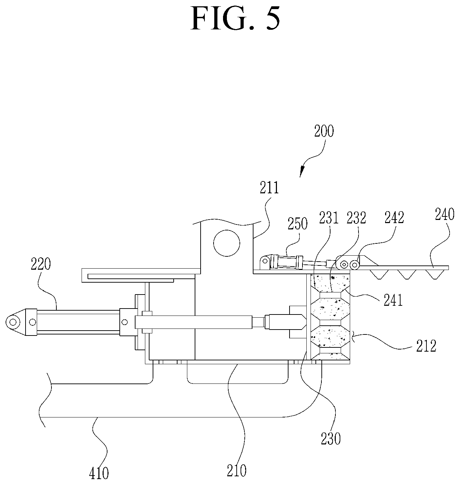

Referring to FIG. 5, next, the discharge door 240 is rotated by operation of the second actuator 250, whereby the outlet 212 of the pressing chamber 210 can be opened. The discharge door 240 closing the outlet 212 is rotated 90 degrees to be horizontally opened in the figure, but the discharge door 240 may be rotated and opened over 90 degrees so that a compressed livestock block 600 can be easily discharged out of the pressing chamber 210 through the outlet 212.

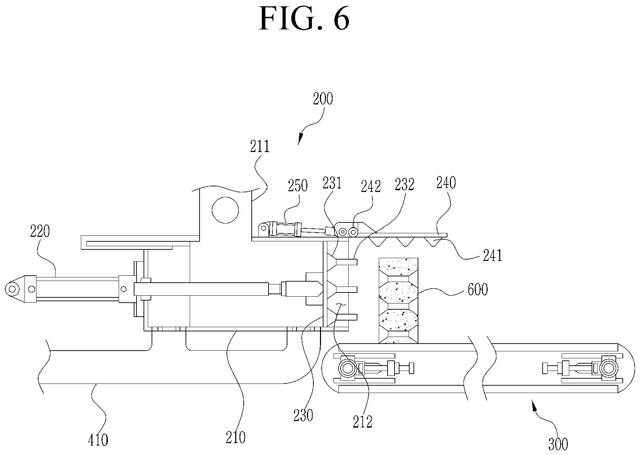

Referring to FIG. 6, thereafter, the pressing plate 230 is further moved right by operation of the first actuator 220, whereby the compressed livestock block 600 is pushed and discharged out of the pressing chamber 210. The discharged livestock block 600 is placed on the conveyer 300 disposed at the outlet 212 of the block maker 200, whereby it can be conveyed to a predetermined place. After the livestock block 600 is discharged out of the pressing chamber 210, the first actuator 220 is operated and the pressing plate 230 is moved to the left end, whereby the pressing plate 230 is returned to the initial position before compression. This process is repeated, so livestock manure can be continuously made into blocks.

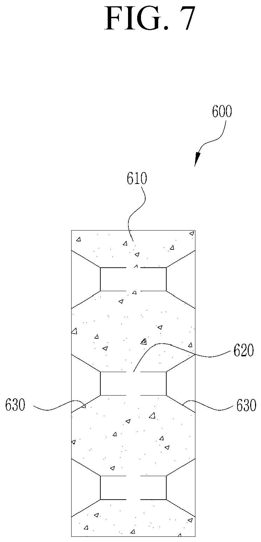

FIG. 7 to FIG. 8 are a front view and a side view showing a livestock manure block discharged from the block maker according to an exemplary embodiment of the present invention.

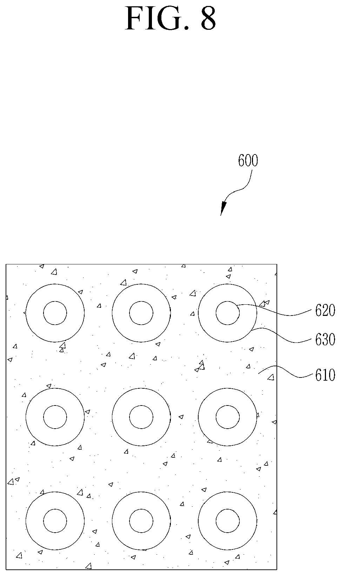

Referring to FIG. 7 and FIG. 8, a livestock block 600 according to the present invention may be composed of a block-shaped solid part 610, a plurality of vents 620, and a plurality of guide grooves 630.

In more detail, since the livestock block 600 is discharged after compressed in the block maker 200, the hexahedral block-shaped solid part 610 can be formed, and a plurality of vents 620 is formed through the left-hand side and the right-hand side that are both sides of the solid part 610 by the protrusions 231 and the through-pins 232 that protrude from the pressing plate 230 of the block maker 200. Further, guide grooves 630 connected to both ends of the vents 620 may be recessed on the left-hand side and the right-hand side of the solid part 610. Accordingly, the livestock block 600 is formed in a hexahedral block shape, so it is very easy to stack and keep or handle a plurality of livestock blocks. Further, moisture remaining in the livestock block can be dried by wind through the vent, and wind is guided to the vents by the guide grooves, so the contact area with air increases, whereby quick drying is possible.

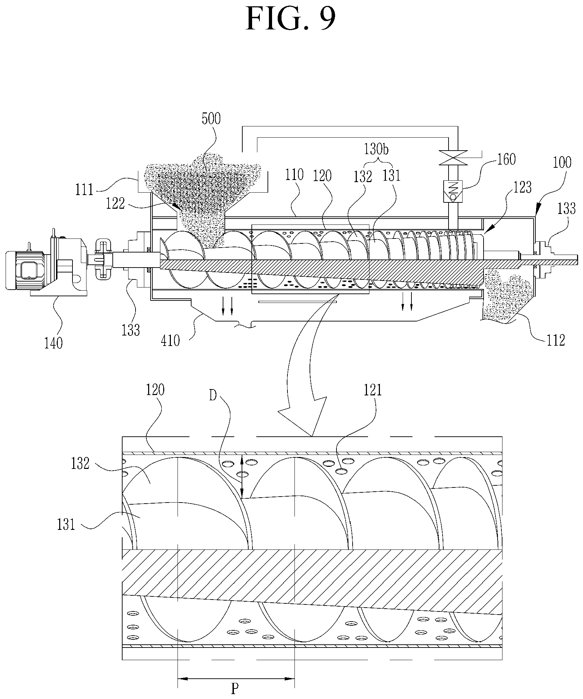

FIG. 9 is a front cross-sectional view showing an apparatus for dehydrating livestock manure according to a second exemplary embodiment of the present invention. The same components as those of the embodiment described above are not described in detail and different components are described.

Referring to FIG. 9, an apparatus for dehydrating livestock manure according to a second exemplary embodiment of the present invention, in a broad meaning, may include a housing 110, a porous filter 120, a screw 130b, and a driving unit 140.

The housing 110 and the driving unit 140 may be similar to those of the first exemplary embodiment described above. The screw 130b, similar to the first exemplary embodiment, includes a rotary shaft 131 and blades 132, in which the screw 130b is formed such that the pitch P of the blades 132 gradually decreases as it goes to the right from the left. Further, the screw 130b is formed such that the depth D of the groove defining the area between adjacent blades and the external circumferential surface of the rotary shaft gradually decreases as it goes to the right from the left. The rotary shaft of the screw 130b according to the second exemplary embodiment is formed such that the exterior diameter gradually increases as it longitudinally goes, and the exterior diameters of the blades 132 are uniform. The porous filter 120 may have a uniform exterior diameter to have a shape corresponding to the outer shape of the screw 130b. The other components may be the same as those of the first exemplary embodiment describe above, so they are not described in detail.

Accordingly, the conveying cross-section decreases in both of the pitch direction and the depth direction as it goes in the conveying direction of the livestock manure, which causes an effect that livestock manure is entirely squeezed while the volume decreases. Accordingly, the effect of dehydrating livestock manure can be maximized.

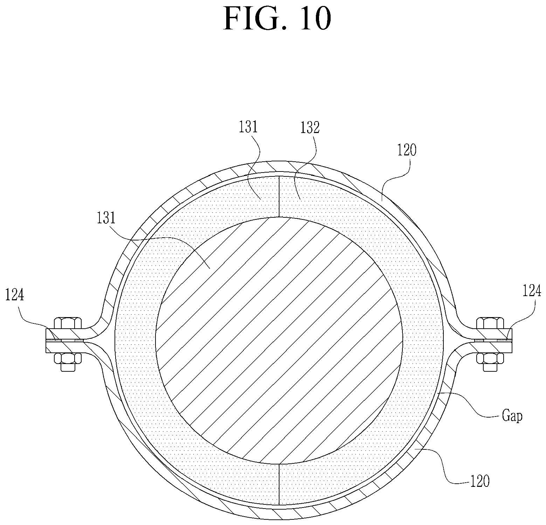

FIG. 10 is a side cross-sectional view showing a porous filter and a screw of the apparatus for dehydrating livestock manure according to the second exemplary embodiment of the present invention.

Referring to FIG. 10, the porous filter 120 may be formed in a separate type in which it is divided into several parts along the central axis. For example, a half pipe-shaped first part is disposed at the upper portion, a half pipe-shaped second part is disposed at the lower portion, and the first part and the second part may be combined. A spacer 124 may be disposed between the combined first part and second part, whereby it is possible to adjust the portion through which livestock manure comes out after dehydrated, that is, the gap defined between the external circumferential surface of the blade at the right end of the screw 130b and the interior circumference of the right end of the porous filter 120. Accordingly, it is possible to adjust the degree of dehydration of livestock manure. The separate-type structure of the porous filter 120 and the gap adjustment structure using the space 124 may be applied to the first exemplary embodiment, and when these structures are applied, the screw can be easily maintained.

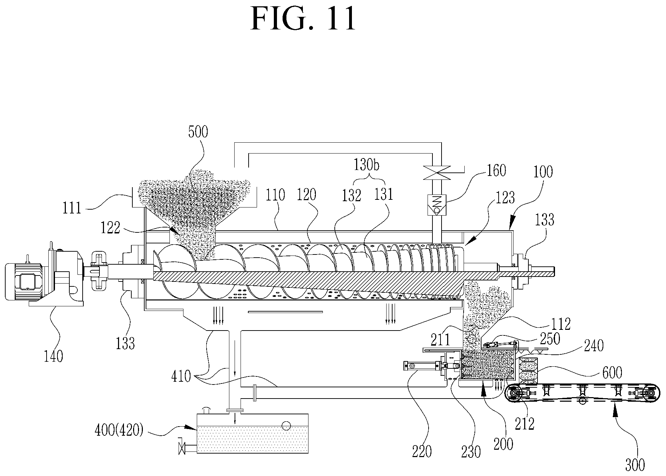

FIG. 11 is a schematic diagram showing a system for treating livestock manure using the apparatus for dehydrating livestock manure according to the second exemplary embodiment of the present invention.

Referring to FIG. 11, a system for treating livestock manure of the present invention, in a broad meaning, may include the apparatus 100 for dehydrating livestock manure described above, a block maker 200, a conveyer 300, and a urine storage 400. The block maker 200, the conveyer 300, and the urine storage 400 may be formed to have the same configuration as those of the first exemplary embodiment.

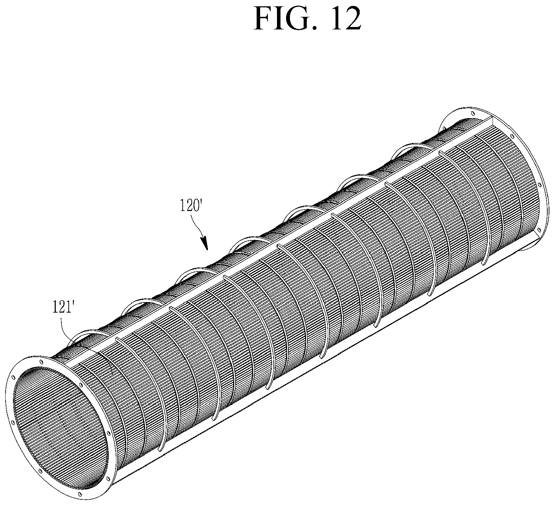

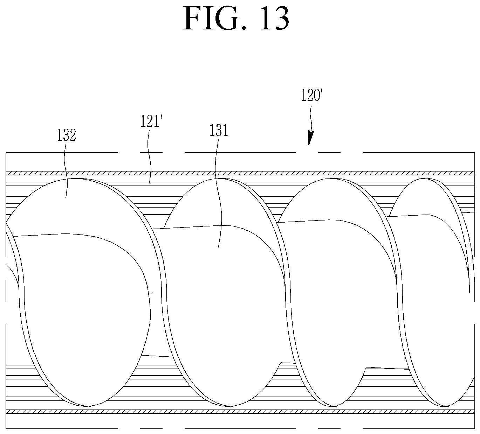

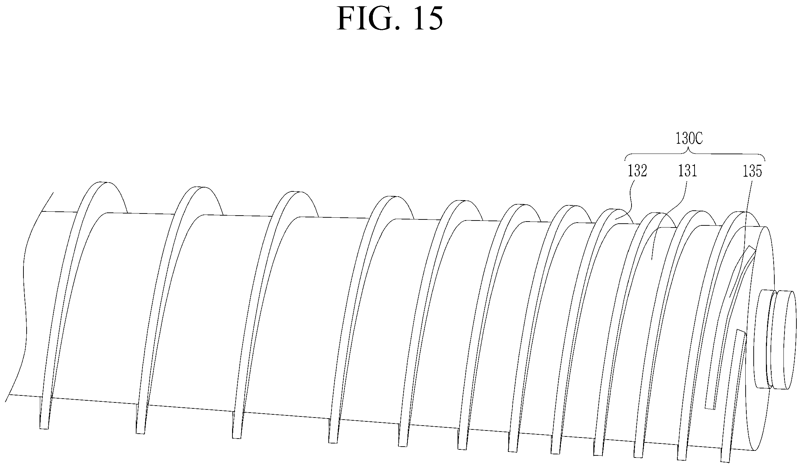

FIG. 12 to FIG. 14 are views showing a porous filter of an apparatus for dehydrating livestock manure according to a third exemplary embodiment of the present invention and FIG. 15 is a view showing a screw of the apparatus for dehydrating livestock manure according to the third exemplary embodiment of the present invention. The same components as those of the embodiment described above are not described in detail and different components are described.

Referring to FIG. 12 to FIG. 14, the porous filter 120' of the apparatus for dehydrating livestock manure according to the third exemplary embodiment of the present invention is formed in a hollow cylindrical shape and has a plurality of moisture discharge holes 121' formed through the interior circumference and external circumferential surface thereof. The moisture discharge holes 121' may have a shape longitudinally extending. For example, the moisture discharge holes 121' may have a slit shape.

The porous filter 120' of the present exemplary embodiment may have a plurality of circular or arc reinforcing members crossing the moisture discharge holes 121' longitudinally extending. The reinforcing members may extend circumferentially on the external circumferential surface of the porous filter 120' not to interfere with moisture passing through the moisture discharge holes 121'.

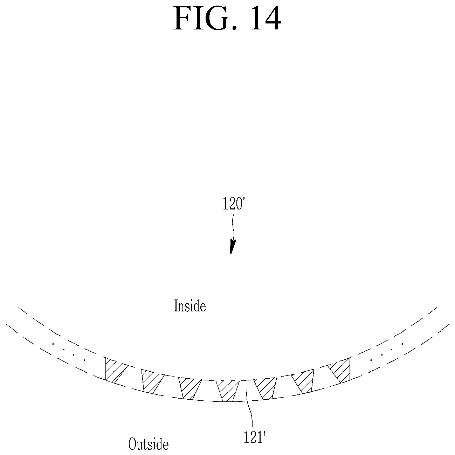

The moisture discharge holes 121' may be formed such that the area increases as it goes outward from the inside. FIG. 14 is a cross-sectional view showing the porous filter 120' longitudinally vertically cut for the convenience of understanding. Referring to FIG. 14, the moisture discharge holes 121' is formed to the outside through the inside such that the area gradually increases. For example, the inner surface of the moisture discharge holes 121' may be inclined surface formed from the inner end to the outer end. Accordingly, it is possible to prevent the moisture discharge holes 121' from clogging and more smoothly discharge moisture. The structure of the moisture discharge holes of which the area gradually increases outward from the inside may be applied to the first and second exemplary embodiments too.

Referring to FIG. 15, the screw 130c of the apparatus for dehydrating livestock manure according to the third exemplary embodiment of the present invention may further include an auxiliary blade 135 other than the rotary shaft 131 and the blades 132 the same as the screws 130a and 130b of the exemplary embodiment described above.

Similar to the previous second exemplary embodiment, the rotary shaft 131 is formed such that the exterior diameter gradually increases longitudinally (in the conveying direction of livestock manure) and the blades 132 are formed such that the exterior diameter is uniform. In this case, the porous filter may have a uniform exterior diameter to have a shape corresponding to the outer shape of the screw 130c. The screw 130c of the present exemplary embodiment may be disposed in a porous filter having a uniform exterior diameter.

As described in the previous exemplary embodiments, the blades may include a plurality of blades (double or more blades) circumferentially spaced apart a predetermined gap from each other. According to the present exemplary embodiment, at least one auxiliary blade 135 may be further formed between a plurality of blades 132 on the rotary shaft at the outlet (the right side in FIG. 15). That is, since the conveying cross-sectional area of the screw 130c gradually decrease as it goes in the conveying direction, livestock manure that is conveyed is dehydrated while the volume is decreased. The auxiliary blade 135 further decreases the conveying cross-sectional area at the outlet, whereby it is possible to increase the effect of dehydrating livestock manure.

Referring to FIG. 15, the auxiliary blade 135 may be disposed in parallel with a plurality of blades 132 on the rotary shaft 131 and may be spaced apart the same distance from adjacent blades at both sides. The auxiliary blade 135 may be formed on the rotary shaft 131 at the outlet, that is, in the area at least after 50% of the conveying distance on the rotary shaft 131. The end of the auxiliary blade 135 at the outlet may have a curvature different from that of the other part so that livestock manure can be smoothly discharged.

Although one auxiliary blade 135 is shown in FIG. 15, the present invention is not limited thereto and a plurality of auxiliary blades 135 may be provided. For example, an auxiliary blade 135 may be provided at least one of the gaps between a plurality of blades 132. A plurality of auxiliary blades 135 may be provided between a plurality of blades 132.

Meanwhile, though not shown in the figures, a system for treating livestock manure using the apparatus for dehydrating livestock manure according to the third exemplary embodiment may be configured, in which the block maker, the conveyer, and the urine storage may be configured in the same way as those of the first and second exemplary embodiments.

As described above, according to the apparatus for dehydrating livestock manure of the present invention and the system for treating livestock manure using the apparatus for dehydrating livestock manure, it is possible to obtain solid livestock manure containing fibrous materials by removing only moisture while keeping fibrous materials as much as possible without pulverizing the fibrous materials contained in livestock manure. Further, it is possible to form livestock manure containing fibrous materials having a low moisture content into a hexahedral shape as a solid fuel, so the present invention can be used as an important part of an energy recycling system. Further, it is possible to achieve a dehydration effect such that livestock manure containing a large amount of moisture and livestock containing a small amount of moisture have the same level of moisture content, and it is possible to efficiently operate equipment because deterioration of dehydration performance and a malfunction of the equipment due to fibrous materials, foreign substances, etc. are prevented.

The present invention is not limited to the exemplary embodiments described above, can be applied to various fields, and can be modified in various ways by those skilled in the art without departing from the the present invention described in claims.

**[Description of symbols]**

| | | | |
|---|---|---|---|
| 100 : | apparatus for dehydrating livestock manure | | |
| 110 : | housing | 111 : | intake port |
| 112 : | exhaust port | 120, 120' : | porous filter |
| 121, 121' : | moisture discharge hole | 122 : | inlet |
| 123 : | outlet | 124 : | spacer |
| 130a, 130b : | screw | 131 : | rotary shaft |
| 132 : | blade | 133 : | bearing |
| 140 : | driving unit | 150 : | gap adjuster |
| 160 : | anti-load device | | |
| 200 : | block maker | | |
| 210 : | pressing chamber | 211 : | inlet |
| 212 : | outlet | 220 : | first actuator |
| 230 : | pressing plate | 231 : | protrusion |
| 232 : | through-pin | 240 : | discharge door |
| 241 : | protrusion | 242 : | rotation shaft |
| 250 : | second actuator | | |
| 300 : | conveyer | 400 : | urine storage |
| 410 : | urine collection pipe | 420 : | urine storage tank |
| 500 : | livestock manure | 600 : | livestock manure block |
| 610 : | solid part | 620 : | vent |
| 630 : | guide groove | | |

## Claims

1. An apparatus for dehydrating livestock manure, comprising:
a porous filter that is hollow and has an inlet at a side through which livestock manure is supplied, an outlet at another side through which dehydrated livestock manure is discharged, and a plurality of moisture discharge holes formed through the inside and outside; and
a screw disposed in the porous filter, and including a rotary shaft and blades spirally formed longitudinally on the rotary shaft,
wherein a distance between the interior circumference of the porous filter and the external circumferential surface of the rotary shaft gradually decreases as it goes longitudinally from the inlet to the outlet.

2. The apparatus of claim 1, wherein:
the rotary shaft of the screw has a uniform exterior diameter, and the exterior diameter and the pitch of the blades gradually decrease as they longitudinally go.

3. The apparatus of claim 2, wherein:
the exterior diameter of the porous filter gradually decreases as it goes longitudinally such that the surface forming the radial outer ends of the blades is parallel with the interior circumstance of the porous filter.

4. The apparatus of claim 1, further comprising
a housing having an intake port at a side through which livestock manure is supplied and that is connected to the inlet of the porous filter, having an exhaust port at another side through which livestock manure is discharged and that is connected to the outlet of the porous filter, and having the porous filter and the screw therein such that the external circumferential surface of the porous filter is coupled to be spaced apart from the housing and the screw is rotatably coupled.

5. The apparatus of claim 1, further comprising
gap adjusters disposed at both sides of a bearing, fitted on the rotary shaft coupled to the housing through the bearing coupled to the housing, supported by the bearing, and being able to adjust a longitudinal position of the screw.

6. The apparatus of claim 1, wherein:
the porous filter is formed in a separate type in which the porous filter is divided into a plurality of parts along a central axis, and the plurality of parts are combined with a spacer therebetween.

7. The apparatus of claim 1, further comprising
an anti-load device connected between the inlet and the outlet of the porous filter and discharging livestock manure into the outside of the porous filter when the internal pressure of the porous filter increases over a predetermined pressure.

8. The apparatus of claim 1, wherein:
the rotary shaft of the screw is formed such that the exterior diameter gradually increases as it goes longitudinally, and the blades have a uniform exterior diameter.

9. The apparatus of claim 1, wherein:
the area of the moisture discharge holes gradually increases as it goes outward from the inside.

10. The apparatus of claim 1, wherein:
the blades include a plurality of blades circumferentially spaced a predetermined gap apart from each other, and
at least one auxiliary blade is formed between a plurality of blades on the rotary shaft at the outlet.

11. A system for treating livestock manure, comprising:
the apparatus for dehydrating livestock manure of any one of claim 1 to claim 10; and
a block maker that has an inlet connected to the outlet of the apparatus for dehydrating livestock manure, compresses livestock manure discharged after dehydrated in the apparatus for dehydrating livestock manure in a pressing chamber, and discharges the livestock manure in a block shape through the outlet.

12. The system of claim 11, wherein:
the block maker includes:
the pressing chamber that is hollow, has an inlet at a side through which livestock manure is supplied, has an outlet at another side through which livestock manure is discharged;
a first actuator installed on a side of the pressing chamber;
a pressing plate coupled to the first actuator to be straightly movable through the pressing chamber, and having a plurality of through-pins protruding toward the outlet; and
a discharge door installed on another side of the pressing chamber and opening/closing the outlet.

13. The system of claim 12, further comprising
a second actuator installed on the pressing chamber,
wherein the discharge door is rotatably coupled to the pressing chamber through a rotation shaft and a side of the discharge door is coupled to the second actuator.

14. The system of claim 13, wherein:
the pressing plate has a plurality of conical protrusions on a surface facing the discharge door, and the through-pins protrude from the centers of the protrusions, respectively.

15. The system of claim 12, wherein:
the discharge door has a plurality of conical protrusions protruding from a surface facing the pressing plate at positions corresponding to the through-pins, respectively.

16. The system of claim 11, further comprising
a conveyer disposed at the outlet of the block maker and conveying livestock manure block formed and discharged by the block maker.

17. The system of claim 11, further comprising
a urine storage connected to the apparatus for dehydrating livestock manure and collecting and storing moisture discharged from the apparatus for dehydrating livestock manure.
